# EUROPEAN PATENT APPLICATION

(11) **EP 1 695 626 A2**
(43) Date of publication of application: **30.08.2006**
(21) Application number: 06250263.8
(22) Date of filing: 18.01.2006
(51) Int. Cl.: A21B 1/48, A21B 2/00, A21B 1/40

(54) **Radiant cooking oven**

(30) Priority: 19.01.2005 US 39141
(71) Applicant: FMC Technologies, Inc., Chicago, IL 60601 (US)
(72) Inventor: Coleman, Marshall K., Kennesaw, Georgia 30152 (US); Kane, Scott, Sandusky, Ohio 44870 (US); Morey, Owen, Huron, Ohio 44839 (US); Randall, James, Huron, Ohio 44839 (US)
(74) Representative: Stainthorpe, Vanessa Juliet

(57) **Abstract**

A cooking oven and method of use includes a housing defining a cooking chamber with a cooking surface extending there through. A plurality of radiant emitter plates are arranged along an inner surface of the housing, preferably in strips or arrays, and directed toward the cooking surface. Each strip or array of radiant emitter plates may be independently controllable from each other. In addition, a distance between the plurality of radiant emitter plates and the cooking surface may be adjustable.

## Description

### BACKGROUND OF THE INVENTION

### Field of the Invention

This invention relates to a cooking oven having a plurality of radiant emitter plates for cooking food products.

### Description of Prior Art

Continuous cooking ovens for cooking food typically include a cooking surface, such as a conveyor belt, for conveying food to be cooked through a cooking chamber. A heat source is typically provided within the cooking chamber for cooking the food provided on the cooking surface. This heat source is traditionally steam, conventional convection and/or forced convection.

A desirable attribute of cooking ovens is the ability to maintain a consistent cooking environment. Such an environment is generally difficult to maintain in existing cooking ovens because of a lack of proper air flow, recirculation, heat exchange and other factors. An additional desirable attribute of cooking ovens is the ability to completely and predictably cook food products while imparting a desired texture and/or appearance. For example, cooked food products having a browned appearance are generally more desirable to consumers.

### SUMMARY OF THE INVENTION

A cooking oven according to one preferred embodiment of this invention is preferably a modular, continuous oven which may have, or operate in connection with, any desired number of interchangeable modules. The cooking oven preferably includes a housing having an inlet and an outlet and an enclosed cooking chamber. A cooking surface preferably extends between the inlet and the outlet and through the chamber.

The cooking oven preferably further includes a plurality of radiant emitter plates arranged along an inner surface or hood of the housing. Each radiant emitter plate is preferably directed toward cooking surface and constructed of perforated stainless steel.

The radiant emitter plates are preferably controllable independently or in predetermined groups or arrays across one or more parameters. As a result, two or more cooking zones may be provided along an inside of the housing. Each cooking zone preferably includes a plurality of radiant emitter plates capable of operation and control at a different temperature than a plurality of adjacent radiant emitter plates within an adjacent cooking zone. As such, the radiant emitter plates may be arranged in arrays, strips or similar such arrangements that permits selective control and adjustment of the operating parameters, such as temperature, of each cooking zone. The radiant emitter plates in each independent cooking zone may also be spaced at different distances from the product cooking belt as a means of varying the cooking effect during the various stages of the product cook process.

A control system may be connected with respect to the plurality of radiant emitter plates to adjust the operating parameters of adjacent arrays of radiant emitter plates within the housing. As a result, at least one radiant emitter plate, strip of radiant emitter plates, array of radiant emitter plates or similar arrangement of radiant emitter plates may be independently controlled from at least one other radiant emitter plate, strip of radiant emitter plates, array of radiant emitter plates or similar arrangement of radiant emitter plates within the cooking oven.

The cooking oven may further include at least one jack or alternate adjusting device connected with respect to the housing for adjusting a distance between the plurality of radiant emitter plates and the cooking surface. Such adjustment may be made based upon the cooking requirements of the food products and may be adjustable during the cooking process or static during the cooking process and adjustable between batches of food products.

Accordingly, the cooking oven and the related method of use as described in this application may be used as a primary cooking method, a pre-heat or pre-treatment method and/or a post-heat or post-treatment method. The radiant emitter plates may further be used in connection with convection cooking and steam cooking in batch, linear and/or spiral ovens. The subject invention enables precise control of the cooking environment thereby enabling precise control over the characteristics of the cooked food product.

### BRIEF DESCRIPTION OF THE DRAWINGS

The above-mentioned and other features and objects of this invention will be better understood from the following detailed description taken in conjunction with the drawings wherein:
Fig. 1 is a perspective view of a cooking oven according to one preferred embodiment of this invention;
Fig. 2 is a cutaway perspective view of the cooking oven shown in Fig 1;
Fig. 3 is a detailed cutaway perspective view of a portion of the cooking oven shown in Fig. 2;
Fig. 4 is a detailed cutaway perspective view of a portion of the cooking oven shown in Fig. 3;
Fig. 5 is a cutaway top view of a cooking oven according to one preferred embodiment of this invention;
Fig. 6 is a cutaway side view of the cooking oven shown in Fig. 5;
Fig. 7 is a front view of a cooking oven according to one preferred embodiment of this invention wherein a plurality of radiant emitter plates are positioned at a first distance from a cooking surface;
Fig. 8 is a front view of the cooking oven shown in Fig. 7 wherein the plurality of radiant emitter plates are positioned at a second, closer distance from the cooking surface; and
Fig. 9 is a schematic of a cooking oven housing having a longitudinal array or strip of radiant emitter plates and control system according to one preferred embodiment of this invention.

### DESCRIPTION OF PREFERRED EMBODIMENTS

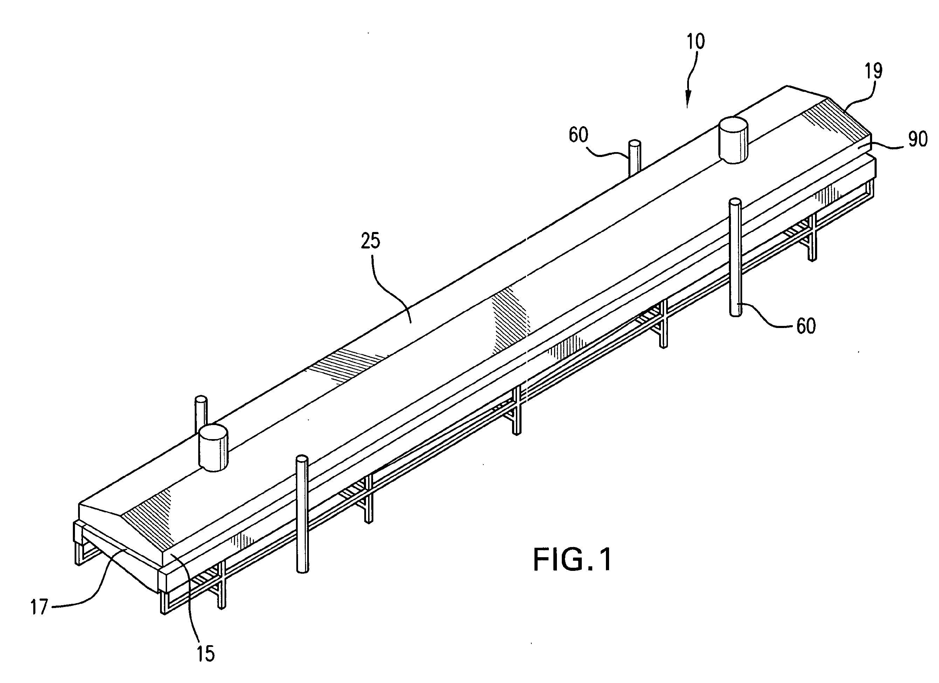

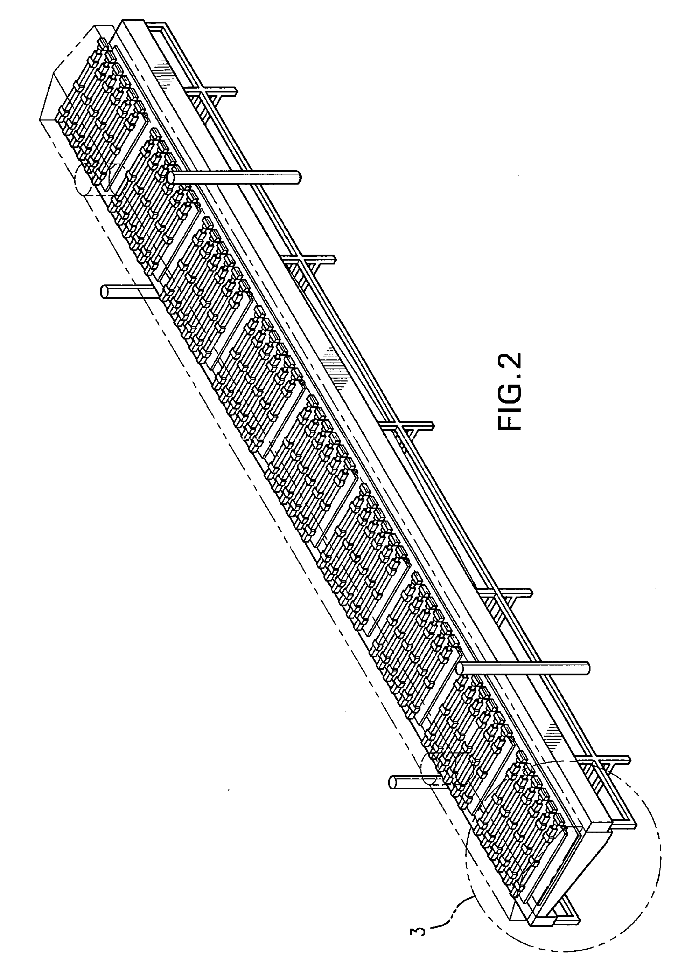

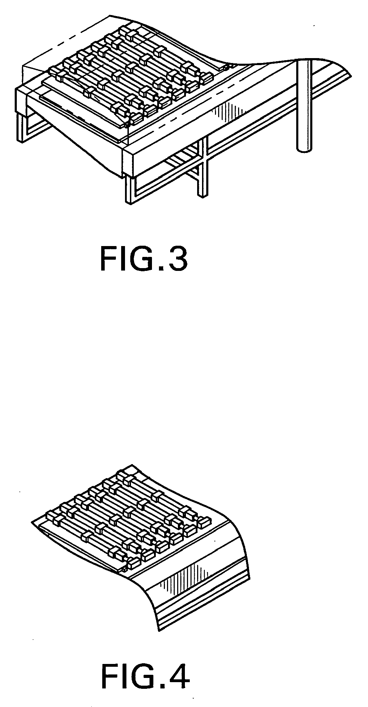

Figs. 1-4 show a cooking oven according to one preferred embodiment of this invention. According to one preferred embodiment of this invention, cooking oven 10 is a modular oven which, depending upon the desired application, may have any desired number of modules joined together in an end-to-end relationship.

As shown, cooking oven 10 includes housing 15 having inlet 17 and outlet 19. Housing 15 encloses chamber 30, namely a cooking chamber. Cooking surface 20 such as conveyor 40, preferably a conveyor belt or similar device known to those having ordinary skill in the art, extends between inlet 17 and outlet 19 and through chamber 30. According to one preferred embodiment of this invention, inlet 17 and outlet 19 may be a common opening such as in a circular conveyor arrangement. Conveyor 40 is preferably a pervious belt thus permitting air and liquid to flow through.

According to a preferred embodiment of this invention, conveyor 40 operates continuously, such as in a continuous loop, whenever cooking oven 10 is in operation. Thus, cooking oven 10 may be referred to as a continuous oven. As described, conveyor 40 may be a conventional flat conveyor belt or may comprise a spherical path or similar non-linear cooking surface path. Uncooked food is loaded onto conveyor 40 continuously at inlet 17 and transported through chamber 30 or a plurality of chamber modules, and emerges cooked, at outlet 19 of cooking oven 10.

As the food passes through cooking oven 10, individual modules may operate either under the same or different cooking conditions. Such modules may include multiple cooking ovens 10 such as disclosed herein or different cooking ovens such as steam cooking ovens, conventional convection cooking ovens and/or forced convection cooking ovens. As such, according to one embodiment of this invention, a first module may be operated as a preheat module and a last module may be operated as a cool-down or post-heat module wherein operating conditions within each module are adjusted as described in more detail below.

Cooking oven 10 further includes a plurality of radiant emitter plates 50 arranged along an inner surface of housing 15. Each radiant emitter plate 50 is preferably directed toward cooking surface 20. According to one preferred embodiment of this invention, radiant emitter plates 50 are perforated plates similar to RADMAX burners manufactured by Maxon Corporation of Muncie, Indiana. Radiant emitter plates 50 are preferably constructed of stainless steel and thus meet stringent health codes required in food processing and cooking environments. According to a preferred embodiment of this invention, reflectors positioned beneath the radiant emitter plates 50 are unnecessary.

Radiant emitter plates 50 are preferably controllable across one or more parameters. Radiant emitter plates 50 are capable of operation up to approximately 927°C [1700 degrees F]. Each radiant emitter plate 50 is approximately 7.6cm [3"] in length by approximately 15.2cm [6"] in width and, as described in more detail below, are preferably arranged or arrangeable in arrays. Arrays of radiant emitter plates 50 can be preset to vary the temperature across conveyor 40.

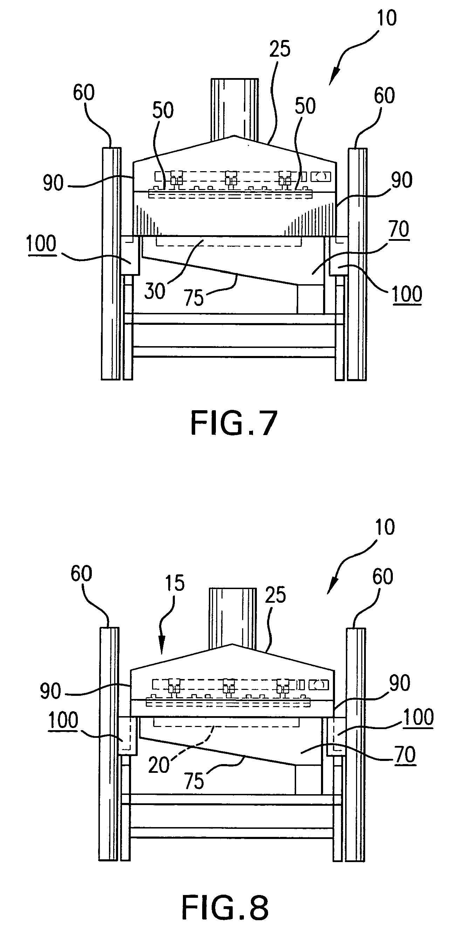

According to a preferred embodiment of this invention, cooking oven 10 further includes at least one jack 60 or alternate adjusting device connected with respect to housing 15 and/or otherwise connected to cooking oven 10 for adjusting a distance between the plurality of radiant emitter plates 50 and cooking surface 20. As shown in Figs. 1-8, several jacks 60 may be positioned around housing 15 to adjust the distance or height of radiant emitter plates 50 from cooking surface 20. Such adjustment may be made based upon the cooking requirements of the food products and may be adjustable during the cooking process or static during the cooking process and adjustable between batches of food products. Fig. 7 is a front view of cooking oven 10 according to one preferred embodiment of this invention wherein the plurality of radiant emitter plates 50 are positioned at a first distance from cooking surface 20. Fig. 8 is a front view of cooking oven 10 shown in Fig. 7 wherein the plurality of radiant emitter plates 50 are positioned at a second, closer distance from cooking surface 20.

As shown in Figs. 7 and 8, housing 15 may include hood 25 within which the plurality of radiant emitter plates 50 are arranged. Multiple jacks 60 may be positioned around hood 25 to effectuate raising and/or lowering radiant emitter plates 50 relative to cooking surface 20. Hood 25 may be raised and/or lowered to adjust cooking conditions along cooking surface 20 and, following a cook cycle or other milestone, may be raised and/or lowered to clean cooking oven 10 including radiant emitter plates 50 and/or cooking surface 20. Hood 25 may further operate to contain radiant heat generated within chamber 30.

For example, a cooking cycle may be initiated within chamber 30 of cooking oven 10 that requires a steady-state temperature for a period of time followed by a browning cycle at the end of the cooking cycle. Accordingly, during such cooking cycle, a distance between the plurality of radiant emitter plates 50 and cooking surface 20 may be adjusted closer so as to suitably brown the food products. Alternatively, the food products may be browned prior to a full cooking cycle, either within cooking oven 10 or within an additional cooking module placed in communication with cooking oven 10. Such additional cooking modules may include conventional convection, forced convection and/or steam cooking.

Therefore, cooking oven 10 and the related method of use as described in this application may be used as a primary cooking method, a pre-heat or pre-treatment method and/or a post-heat or post-treatment method. The subject invention enables precise control of the cooking environment thereby enabling precise control over the characteristics of the cooked food product.

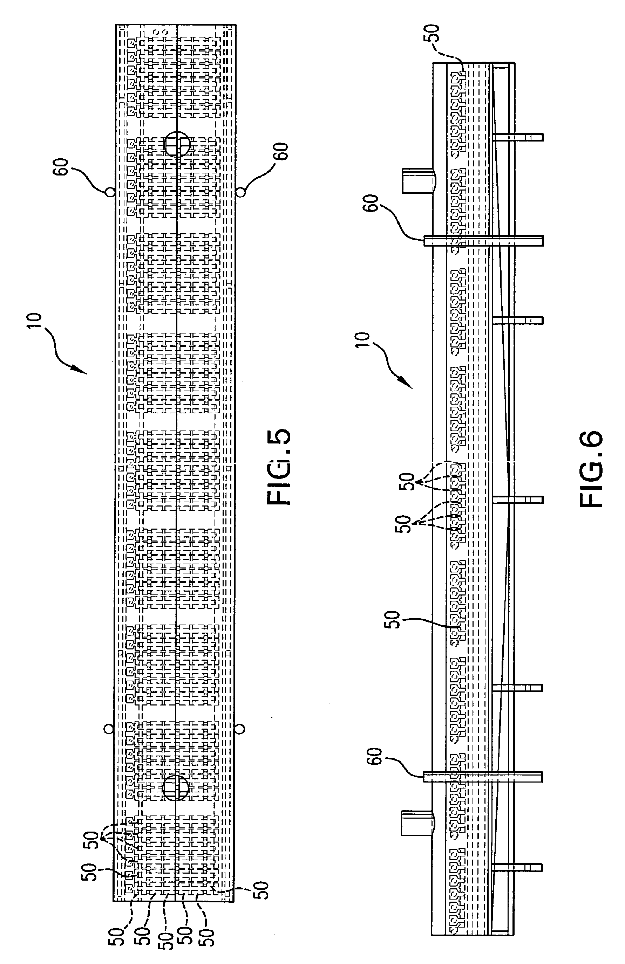

According to a preferred embodiment of this invention, best shown in Figs. 5 and 6, a plurality of cooking zones may be provided along an inside of housing 15. Each cooking zone preferably includes one or more likely a plurality of radiant emitter plates 50 capable of operation and control at a different temperature than one or more likely a plurality of adjacent radiant emitter plates 50 within an adjacent cooking zone. As such, radiant emitter plates 50 may be arranged in arrays, strips or similar such arrangements that would permit selective control and adjustment of the operating parameters, such as temperature, of each cooking zone. Accordingly, by varying the temperature of adjacent radiant emitter plates 50 or arrays of radiant emitter plates 50 throughout cooking oven 10, precise control over the cooking process may be obtained.

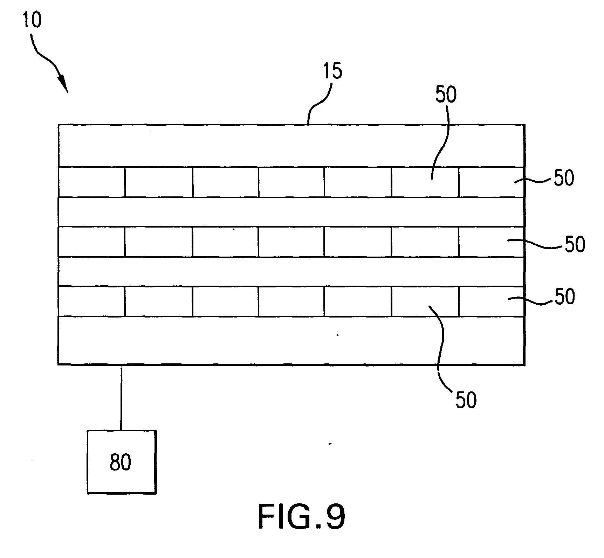

According to one preferred embodiment of this invention, the plurality of radiant emitter plates 50 are arranged in multiple arrays along an inner surface of housing 15 and directed toward cooking surface 20. The multiple arrays may comprise strips, blocks and/or similar clusters arranged along the inner surface of housing 15. The arrays may be positioned transversely relative to cooking surface 20, i.e., across a width of cooking oven 10, and/or may be positioned longitudinally relative to cooking surface 20, i.e. along a length of cooking oven 10, such as shown schematically in Fig. 9. According to another preferred embodiment of this invention, arrays of radiant emitter plates 50 may be spaced throughout the inner surface of housing 15 so as to enable control across both the width and the length of cooking oven 10.

As shown schematically in Fig. 9, control system 80 is preferably connected with respect to the plurality of radiant emitter plates 50. Control system 80 may be any burner control known to those having ordinary skill in the art and is preferably used to adjust the operating parameters of adjacent radiant emitter plates 50 and/or adjacent arrays of radiant emitter plates 50 within housing 15. Accordingly, control system 80 may operate longitudinally adjacent arrays of radiant emitter plates 50 at different operating parameters. For example, the outer strips of radiant emitter plates shown in Fig. 9 may operate at different temperatures than the center strip of radiant emitter plates shown in Fig. 9. Alternatively, or in addition, control system 80 may operate transversely adjacent arrays of radiant emitter plates 50 at different operating parameters. As a result of a desired control system 80 as described herein, at least one radiant emitter plate 50, strip of radiant emitter plates 50, array of radiant emitter plates 50 or similar arrangement of radiant emitter plates 50 may be independently controlled from at least one other radiant emitter plate 50, strip of radiant emitter plates 50, array of radiant emitter plates 50 or similar arrangement of radiant emitter plates 50 within cooking oven 10.

Cooking oven 10 and specifically housing 15 may further include trough 70 positioned below cooking surface 20. Trough 70 preferably includes lower surface 75 extending at an angle relative to cooking surface 20. Depending upon a desired cooking environment, trough 70 may be at least partially filled with water. As a result, a suitable humidity within chamber 30 may be controlled and/or maintained during the cooking process.

According to one preferred embodiment of this invention shown in Figs. 7 and 8, housing 15 further includes at least a pair of opposing sidewalls 90 extending from housing 15, and more specifically from hood 25. Sidewalls 90 further define chamber 30 within cooking oven 10. In addition, sidewalls 90 may be extendable in connection with hood 25 and/or housing 15 downward or upwards using jacks 60.

According to a preferred embodiment of this invention, sidewalls 90 may be extendable into water within trough 70 or water within a separately defined tray 100 formed around chamber 30 and, specifically, around cooking surface 20 so as to create a water seal around cooking surface 20 thereby maintaining a desired humidity within chamber 30. Such a water seal may be desirable in a high humidity environment or in a cooking environment wherein retention of products of combustion, such as smoke or heat, is desirable. The water seal further acts as a seal for chamber 30 which permits chamber 30 to be safely cleaned using internal CIP nozzles, in part, by preventing cleaning chemicals from escaping the oven, specifically chamber 30, during this process.

Fig. 7 is a front view of cooking oven 10 according to one preferred embodiment of this invention wherein sidewalls 90 are positioned at a distance from a bottom surface of tray 100. Fig. 8 is a front view of cooking oven 10 shown in Fig. 7 wherein sidewalls 90 are positioned fully within tray 100 and presumably within a level of water maintained within tray 100.

While in the foregoing specification this invention has been described in relation to certain preferred embodiments thereof, and many details have been set forth for purpose of illustration, it will be apparent to those skilled in the art that this invention is susceptible to additional embodiments and that certain of the details described herein can be varied considerably without departing from the basic principles of the invention.

## Claims

1. A cooking oven including a housing defining a chamber, the cooking oven comprising:
a cooking surface extending through the chamber;
a plurality of radiant emitter plates arranged along an inner surface of the housing, the radiant emitter plates directed toward the cooking surface; and
at least one jack for adjusting a distance between the plurality of radiant emitter plates and the cooking surface.

2. A cooking oven including a housing defining a chamber and a continuous loop cooking surface extending within the chamber, the cooking oven comprising:
a plurality of radiant emitter plates arranged in multiple arrays along an inner surface of the housing, the radiant emitter plates constructed of stainless steel and directed toward the cooking surface; and
a control system connected with respect to the plurality of radiant emitter plates, the control system for adjusting the operating parameters of adjacent arrays of radiant emitter plates within the housing.

3. The cooking oven of Claim 2 further comprising:
at least one jack for adjusting a distance between the plurality of radiant emitter plates and the cooking surface.

4. The cooking oven of any of the preceding claims wherein the plurality of radiant emitter plates are stainless steel.

5. The cooking oven of any of the preceding claims wherein the cooking surface comprises a continuous belt extending between an inlet and an outlet of the chamber.

6. The cooking oven of any of the preceding claims further comprising:
a plurality of cooking zones provided along the housing, each cooking zone of the plurality of cooking zones including one or more radiant emitter plates operable at a different temperature than one or more adjacent radiant emitter plates.

7. The cooking oven of any of the preceding claims further comprising:
a trough positioned below the cooking surface, the trough at least partially filled with water.

8. The cooking oven of Claim 7 wherein the trough includes a lower surface extending at an angle relative to the cooking surface.

9. The cooking oven of Claim 7 or Claim 8 further comprising:
a sidewall extending from the housing, at least a portion of the sidewall extendable into the water within the trough.

10. The cooking oven of any of the preceding claims wherein the plurality of radiant emitter plates are arranged in a plurality of arrays above the cooking surface.

11. The cooking oven of Claim 10 wherein each array of the plurality of arrays is operable at a different temperature and is preferably further operable at similar temperatures.

12. The cooking oven of any of the preceding claims wherein the housing further comprises:
a hood positioned over the chamber, the plurality of radiant emitter plates arranged along an inner surface of the hood, the hood containing radiant heat generated within the chamber.

13. The cooking oven of Claim 2 or Claim 10 wherein longitudinally adjacent arrays of radiant emitter plates are operable at different operating parameters.

14. The cooking oven of Claim 2 or Claim 10 wherein transversely adjacent arrays of radiant emitter plates are operable at different operating parameters.

15. The cooking oven of Claim 2 or Claim 10 wherein the arrays of radiant emitter plates are arranged in strips extending across the inner surface of the housing.

16. The cooking oven of Claim 4 wherein each radiant emitter plate comprises a perforated stainless steel plate.

17. The cooking oven of any of the preceding claims further comprising:
a pair of sidewalls extending downwardly from the housing;
a tray extending at least partially around the cooking surface, the tray containing a fluid and the pair of sidewalls adjustable into the tray.

18. A method for operating a cooking oven including the steps of:
extending a cooking surface through a chamber of the cooking oven;
positioning a plurality of radiant emitter plates toward the cooking surface; and
independently controlling at least one radiant emitter plate from at least one other radiant emitter plate of the plurality of radiant emitter plates.

19. The method of Claim 18 further comprising:
independently controlling at least one radiant emitter plate from at least one other radiant emitter plate across a longitudinal distance of the plurality of radiant emitter plates.

20. The method of Claim 18 further comprising:
independently controlling at least one radiant emitter plate from at least one other radiant emitter plate across a transverse distance of the plurality of radiant emitter plates.

21. The method of Claim 18 further comprising:
aligning adjacent strips of radiant emitter plates along an interior of the chamber above the cooking surface; and
independently controlling the adjacent strips of radiant emitter plates from each other.

22. The method of Claim 18 further comprising:
aligning adjacent arrays of radiant emitter plates along an interior of the chamber above the cooking surface; and
independently controlling the adjacent arrays of radiant emitter plates from each other.

23. The method of any of claims 18-22 further comprising:
adjusting a distance between the plurality of radiant emitter plates and the cooking surface.

24. The method of any of claims 18-23 further comprising:
submerging a sidewall of the cooking oven within a liquid to create a seal around the cooking surface.

25. The method of any of claims 18-24 further comprising:
initiating a cooking cycle within the chamber; and
adjusting a distance between the plurality of radiant emitter plates and the cooking surface during the cooking cycle.
